# EUROPEAN PATENT APPLICATION

(11) **EP 1 914 993 A2**
(43) Date of publication of application: **23.04.2008**
(21) Application number: 07112244.4
(22) Date of filing: 11.07.2007
(51) Int. Cl.: H04N 7/24, H04N 5/00

(54) **Digital broadcasting receiver and scrambled channel determination method thereof**

(30) Priority: 19.10.2006 KR 20060101920
(71) Applicant: Samsung Electronics Co., Ltd., Suwon-si, Gyeonggi-do 442-742 (KR)
(72) Inventor: Kim, In-tech 206-604 Dongsuwon LG Village 2nd Apartment, Gyeonggi-do (KR); Lee, Hyun-soo, Suwon-si, Gyeonggi-do (KR)
(74) Representative: Clark, David James

(57) **Abstract**

A digital broadcasting receiver (100, 400) and a scrambled channel determination method thereof are provided. The digital broadcasting receiver (100, 400) includes a header analyzing unit (132, 442, 452) which analyzes headers of a video packet and an audio packet separated from a transport stream, to thereby determine existence of a start portion of a packetized elementary stream (PES) packet data, and a scramble determination unit (133, 443, 453) which determines the existence of a scrambled channel by analyzing payloads of the video packet and the audio packet, if the header analyzing unit has decided that the video packet and the audio packet contain the start portion of the PES packet data. Accordingly, the digital broadcasting receiver (100, 400) provides an improved response speed during channel selection.

## Description

Apparatuses and methods consistent with the present invention relate to digital broadcasting receivers and to scrambled channel determination methods.

A scrambled broadcast is a broadcast having a special coding applied to a broadcasting signal, or a broadcast that only a special user can watch the sequence of scan lines thereof. Such a scrambled broadcast is predominantly used in a satellite broadcast and a paid broadcast, such as a cable television (CATV).

In scrambled broadcasts, broadcasting signals are scrambled according to specified rules to prevent unauthorized recipients from viewing the broadcasts. Normal TVs cannot convert these scrambled TV signals into viewable pictures, and an exclusive decoder is required to display them into clear pictures. Therefore, a digital broadcasting receiver is required to identify a scrambled channel during channel selection or automatic channel setup.

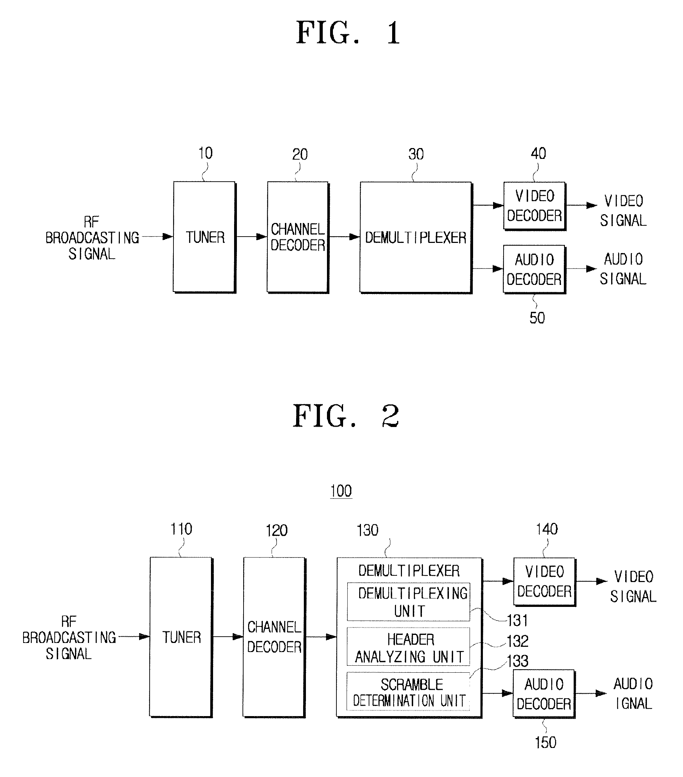

FIG. 1 is a block diagram of a related digital broadcasting receiver in the art.

Referring to FIG. 1, the related digital broadcasting receiver includes a tuner 10, a channel decoder 20, a demultiplexer 30, a video decoder 40, and an audio decoder 50. The tuner 10 modulates a radio frequency (RF) broadcasting signal of interest to an internal frequency, and the channel decoder 20 converts a vestigial side band (VSB)/ quadrature amplitude modulation (QAM) modulated analog signal to a digital transport stream. The demultiplexer 30 demultiplexes the transport stream, and the video and audio decoders 40 and 50 decode video signals and audio signals, respectively.

Generally, if a lock state is determined by the channel decoder 20, the digital broadcasting receiver determines a scrambled channel depending on whether the decoding operation has been normally conducted by the video and audio decoders 40 and 50.

In other words, the digital broadcasting receiver that determines whether a received channel has been scrambled by the above method cannot determine if a signal of interest is a scrambled signal until the video and audio decoders 40 and 50 complete their decoding operations. This poses a problem in that the related digital broadcasting receiver spends a considerable amount of time checking whether video and audio signals have been normally decoded.

Exemplary embodiments of the present invention aim to address the above disadvantages, and other disadvantages not described above.

According to an aspect of the present invention, there is provided a digital broadcasting receiver, including: a header analyzing unit which analyzes a header of a video packet and an audio packet separated from a transport stream, to thereby determine the existence of a start portion of a packetized elementary stream (PES) packet data; and a scramble determination unit which determines the existence of a scrambled channel by analyzing the payload of the video packet and the audio packet, if the header analyzing unit determines that the video and the audio packets contain the start portion of the PES packet data.

The scramble determination unit may determine the existence of a scrambled channel by analyzing payloads of a pair of the video and audio packets.

The header analyzing unit may determine that the video and audio packets contain the start portion of the PES packet data, if a payload unit start indicator (PUSI) field in the header has a value of' '1'.

The scramble determination unit may determine whether the payload contains a bit stream corresponding to a packet start code prefix (PSCP) and a Stream Identifier (ID), and determine the scrambled channel if the bit stream is not contained in either of the video packet and the audio packet.

The digital broadcasting receiver may further include: a tuner which converts an RF broadcasting signal to an IF broadcasting signal; a channel decoder which converts the converted IF broadcasting signal to a transport stream; a demultiplexer which separates the converted transport stream into a video packet and an audio packet; a video decoder which decodes the separated video packet; and an audio decoder which decodes the separated audio packet.

The header analyzing unit and the scramble determination unit may be built in the demultiplexer.

The header analyzing unit and the scramble determination unit may be in the video decoder and in the audio decoder, respectively.

Another aspect of the present invention provides a scrambled channel determination method, including: analyzing header of a video and an audio packet separated from a transport stream, to thereby determine the existence of a start portion of a packetized elementary stream (PES) packet data; and determining, based on the determination result, the existence of a scrambled channel by analyzing the payload of the video and the audio packets, if the video and the audio packets contain the start portion of the PES packet data.

The existence of a scramble channel may be determined by analyzing payloads of a pair of the video and audio packets.

The PES packet data may be determined to have the start portion if PUSI field in the header has a value of '1'.

The determination of the existence of the scrambled channel may include: determining whether the payload contains a bit stream corresponding to PSCP and a Stream ID; and determining that the transport stream carries the scrambled channel if the bit stream is not contained in either of the video packet and the audio packet.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram of a related art digital broadcasting receiver;
FIG. 2 is a block diagram of a digital broadcasting receiver according to an exemplary embodiment of the present invention;
FIG. 3 illustrates a PES packet structure used in the receiver of FIG. 2;
FIG. 4 illustrates a structure of a transport stream packet used in the receiver of FIG. 2;
FIG. 5 is a block diagram of a digital broadcasting receiver according to another exemplary embodiment of the present invention; and
FIG. 6 is a flow chart illustrating a scrambled channel determination method according to an exemplary embodiment of the present invention.

Exemplary embodiments of the present invention will now be described in detail with reference to the accompanying drawings.

FIG. 2 is a block diagram of a digital broadcasting receiver according to an exemplary embodiment of the present invention.

Referring to FIG. 2, the digital broadcasting receiver 100 includes a tuner 110, a channel decoder 120, a demultiplexer 130, a video decoder 140, and an audio decoder 150.

The tuner 110 receives an RF broadcasting signal within a band of 6MHz, and modulates the received RF broadcasting signal to an IF broadcasting signal as an output.

The channel decoder 120 converts a VSB/QAM modulated analog signal to a digital transport stream as an output.

In addition, the channel decoder 120 converts the IF broadcasting signal outputted from the tuner 110 to a transport stream, and determines a lock state, which is determined if there is an effective transport stream in a current broadcast channel.

The demultiplexer 130 demultiplexes the transport stream having been converted in the channel decoder 120. Referring back to FIG. 2, the demultiplexer 130 includes a demultiplexing unit 131, a header analyzing unit 132, and a scramble determination unit 133.

The demultiplexing unit 131 carries out demultiplexing of a transport stream which is part of the ordinary functions of a demultiplexer. As the transport stream is demultiplexed in the demultiplexing unit 131, it is divided into a video packet and an audio packet.

The header analyzing unit 132 analyzes headers of the video and audio packets separated by the demultiplexing unit 131, to thereby determine whether it contains a start portion of packetized elementary stream (PES) packet data.

In particular, the header analyzing unit 132 determines that a video or a audio packet of interest contains a start portion of the PES packet data if the value of a payload unit start indicator (PUSI) field among other fields composing the header of a video and an audio packet is '1'.

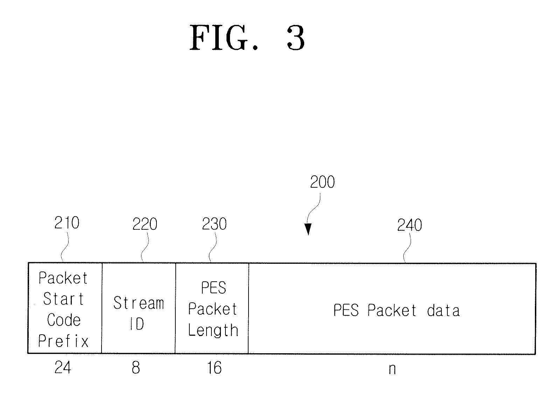

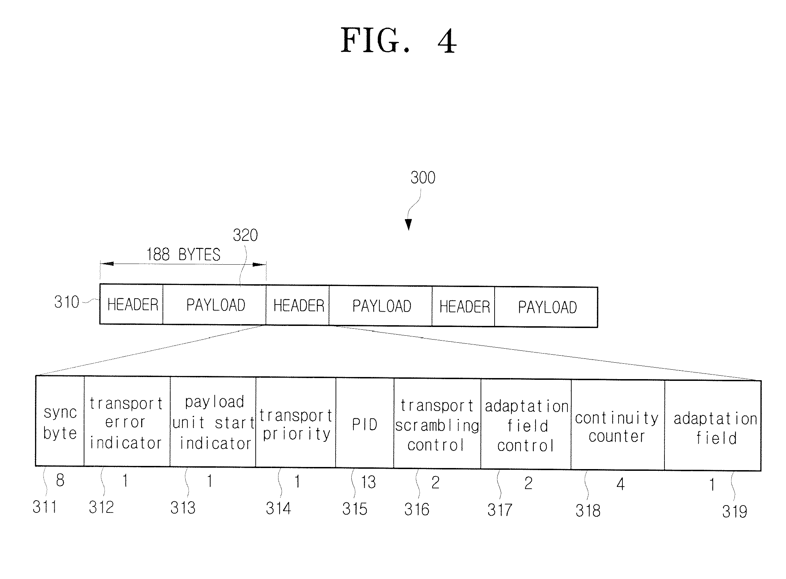

Here, if the PUSI field value is '1', it means the payload of a current video and of an audio packet contain the first byte of the PES packet. Further details on how the header analyzing unit 132 determines the existence of a start portion of PES packet data, and on the PES packet will be discussed below with reference to FIG. 3 and FIG. 4.

If it is determined, by the header analyzing unit 132, that the video and the audio packets contain the start portion of the PES packet data, the scramble determination unit 133 analyzes a payload of the video and the audio packets, to thereby determine the existence of a scrambled channel.

The scramble determination unit 133 determines whether a video and an audio packet payload contains a bit stream corresponding to a packet start code prefix (PSCP) and a stream ID. Here, the bit stream has a unique (i.e., predetermined) pattern.

The scramble determination unit 133 may determine the existence of a scrambled channel by analyzing the payload of a pair of video and audio packets. This is because there is no enforced rule - although it is normal that a video and an audio packet contains a PSCP and a Stream ID - stipulating that a video and an audio packet should contain PSCP and stream ID. That is to say, it is desirable that the scramble determination unit 133 analyzes a pair of video and audio packets to determine the existence of a scrambled channel because a certain video or audio packet may not contain a PSCP and a stream ID.

If none of the video and audio packets contains a bit stream corresponding to the PSCP and the stream ID, the scramble determination unit 133 regards a current transport stream as a scrambled channel. On the other hand, if at least one of the video and audio packets contains a bit stream corresponding to the PSCP and the stream ID, the scramble determination unit 133 regards the current transport stream as a non-scrambled (or unscrambled) channel.

How the scramble determination unit 133 identifies a scrambled channel will be explained in further detail in reference to FIG. 3 and FIG. 4.

The video decoder 140 decodes a video packet separated by demultiplexing in the demultiplexing unit 131 to thereby output a video signal.

Likewise, the audio decoder 150 decodes an audio packet separated by demultiplexing in the demultiplexing unit 131 to thereby output an audio signal.

FIG. 3 illustrates a PES packet structure used in FIG. 2, and FIG. 4 illustrates the structure of a transport stream packet used in FIG. 2.

To briefly explain the procedure for production of a transport stream packet 300, an actual video is encoded in MPEG-2, and voice/sound is encoded in AC3 files. These are called a video ES and an audio ES, respectively. An elementary stream (ES) is cut off in a variable length, and a header is added thereto to be converted to a PES packet 200 format. The PES packet 200 has a variable, not fixed, length.

The PES packet 200 is cut off in a fixed length and a header is attached thereto (a total of 188 bytes including the header), to thereby convert it to the transport stream packet 300. The transport stream packet 300 thus produced is then transported from a digital broadcasting transmitter (not shown) to the digital broadcasting receiver 100.

The structure of a general PES packet 200 is illustrated in FIG. 3. Referring to FIG. 3, the PES packet 200 includes a Packet Start Code Prefix field (hereinafter referred to simply as PSCP) 210, a Stream ID field 220, a PES Packet length field 230, and a PES Packet data field 240.

Among many fields of the PES packet 200, the PSCP field 210 and the Stream ID field 220 are the ones the scramble determination unit 133 uses as criteria for identifying a scramble channel. In a digital broadcast, the Stream ID of a video PES packet has a value of '1110 XXXX'. The Stream ID of an audio PEC packet in case of AC3, the American side of hardcore, has a value of '1011 1101', while that of an MPEG series audio in European side of hardcore has a value of '110X XXXX'. Regardless of video and audio, the PSCP field 210 has a value of '0000 0000 0000 0000 0000 0001'.

The scramble determination unit 133 determines whether a payload 320 of the transport stream packet 300 contains a bit stream corresponding to the PSCP + the Stream ID. If the bit stream corresponding to the PSCP + the Stream ID is contained in the transport stream packet 300, the scramble determination unit 133 determines that a current broadcast signal is not of a scrambled channel. If the bit stream corresponding to the PSCP + the Stream ID is not contained in the transport stream packet 300, the scramble determination unit 133 determines that a current broadcast signal is of a scrambled channel.

That is, if a current transport stream is a video PES packet, the scramble determination unit 133 determines whether the packet's payload 320 contains a bit stream has a pattern of '0000 0000 0000 0000 0000 0001 1110 XXXX', to thereby identify a scrambled channel.

In addition, if a current transport stream is an audio PES packet, the scramble determination unit 133 determines whether the packet's payload 320 contains a bit stream has a pattern of '0000 0000 0000 0000 0000 0001 1011 1101' or '0000 0000 0000 0000 0000 0001 110X XXXX', to thereby identify a scrambled channel.

Among other fields of the PES packet 200, the PSCP field 210 and the Stream ID field 220 are particularly used in this exemplary embodiment for determination of a scrambled channel. This is why the above discussion mainly focused on the PSCP field 210 and the Stream ID field 220. The other fields except for the PSCP field 210 and the Stream ID field 220 are already well known in the art in general, so their explanation is omitted.

A structure of a related transport stream packet 300 is illustrated in FIG. 4. Referring to FIG. 4, the transport stream packet 300 includes a 4-byte header 310 and 184-byte payload 320. That is, the transport stream packet 300 has a total length of 188 bytes by adding the header 310 and the payload 320 fields.

Among them, the structure of the header 310 is described as follows. The header 310 consists of a sync byte field 311, a transport error indicator field 312, a payload unit start indicator field (hereinafter referred to simply as PUSI) 313, a transport priority field 314, a PID field 315, a transport scrambling control field 316, an adaptation field control field 317, a continuity counter field 318, and an adaptation field 319.

Among those fields composing the header 310 of the transport stream packet 300, the PUSI field 313 is used in the header analyzing unit 132 to determine whether the video and the audio packets contain a start portion of the PES packet 200 data.

The PUSI field 313 is a 1-bit field having a value of '1' or '0'. If the PUSI field 313 has the value '1', it means a start portion of the PES packet 200. If the PUSI field 313 has the value `0', it means a central portion or a last portion(i.e., not the start portion) of the PES packet 200.

Therefore, the header analyzing unit 132 determines that the video and the audio packets have the start portion of the PES packet 200 data if the PUSI field 313 has a value of '1'. The header analyzing unit 132 determines that the video and the audio packets do not have the start portion of the PES packet 200 data if the PUSI field 313 has a value of '0'.

Among those fields composing the header 310 of the transport stream packet 300, the PUSI field 313 is used in this exemplary embodiment to determine the existence of the start portion of the PES packet data. This is why the above discussion mainly focused on the PUSI field 313. The other fields except for the PUSI field 313 are already well known in the art in general, so their explanation is omitted.

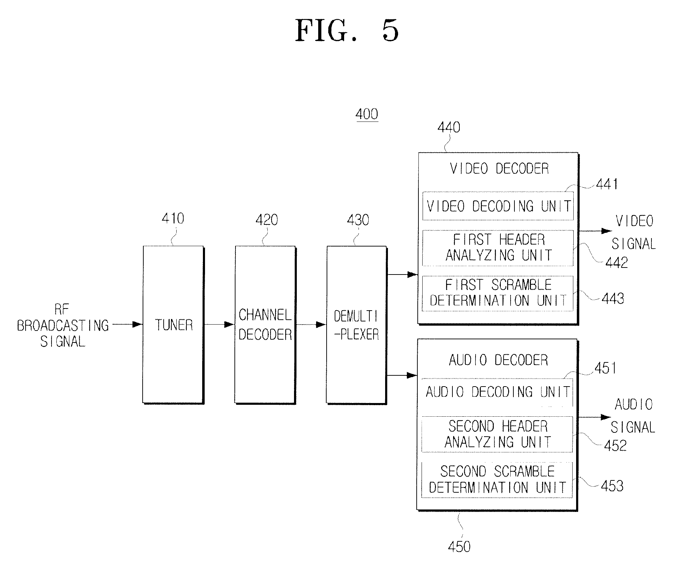

FIG. 5 is a block diagram of a digital broadcasting receiver according to another exemplary embodiment of the present invention.

The digital broadcasting receiver 100 illustrated in FIG. 2 has the header analyzing unit 132 and the scramble determination unit 133 installed in the demultiplexer 130.

However, according to the digital broadcasting receiver 400 illustrated in FIG. 5 of another exemplary embodiment, the header analyzing unit and the scramble determination unit are provided to both a video decoder 440 and an audio decoder 450, respectively.

Referring to FIG. 5, the digital broadcasting receiver 400 includes a tuner 410, a channel decoder 420, a demultiplexer 430, a video decoder 440, and an audio decoder 450. Here, the tuner 410 and the channel decoder 420 perform the same functions as those of the tuner 110 and the channel decoder 120 shown in FIG. 2.

The demultiplexer 430 demultiplexes an encoded transport stream in the channel decoder 420. Unlike the demultiplexer 130 shown in FIG. 2 including the demultiplexing unit 131, the header analyzing unit 132, and the scramble determination unit 133, the demultiplexer 430 according to this exemplary embodiment only performs demultiplexing of the transport stream.

The video decoder 440 includes a video decoding unit 441, a first header analyzing unit 442, and a first scramble determination unit 443.

The video decoding unit 441 decodes a video packet separated by the demultiplexer 430.

The first header analyzing unit 442 performs similar functions to the header analyzing unit 132 shown in FIG. 2. However, a difference between them is that the first header analyzing unit 442 analyzes the header 310 of a transport stream of the video packet only, to thereby determine the existence of the start portion of the PES packet data.

The first scramble determination unit 443 performs similar functions to the scramble determination unit 133 shown in FIG. 2. However, a difference between them is that the first scramble determination unit 443 handles only the video packet to determine whether the payload 320 of its transport stream contains a bit stream corresponding to the PSCP + the Stream ID. In this manner, the first scramble determination unit 443 may be able to determine whether or not a current transport stream carries a scrambled channel.

The audio decoder 450 includes an audio decoding unit 451, a second header analyzing unit 452, and a second scramble determination unit 453.

The audio decoding unit 451 decodes an audio packet separated by the demultiplexer 430.

The second header analyzing unit 452 performs similar functions to the header analyzing unit 132 shown in FIG. 2. However, a difference between them is that the second header analyzing unit 452 analyzes the header 310 of a transport stream of the audio packet only, to thereby determine the existence of the start portion of the PES packet data.

The second scramble determination unit 453 performs similar functions to the scramble determination unit 133 shown in FIG. 2. However, a difference between them is that the second scramble determination unit 453 handles only the audio packet to determine whether the payload 320 of its transport stream contains a bit stream corresponding to the PSCP + the Stream ID. In this manner, the second scramble determination unit 443 may be able to determine whether or not a current transport stream carries a scrambled channel.

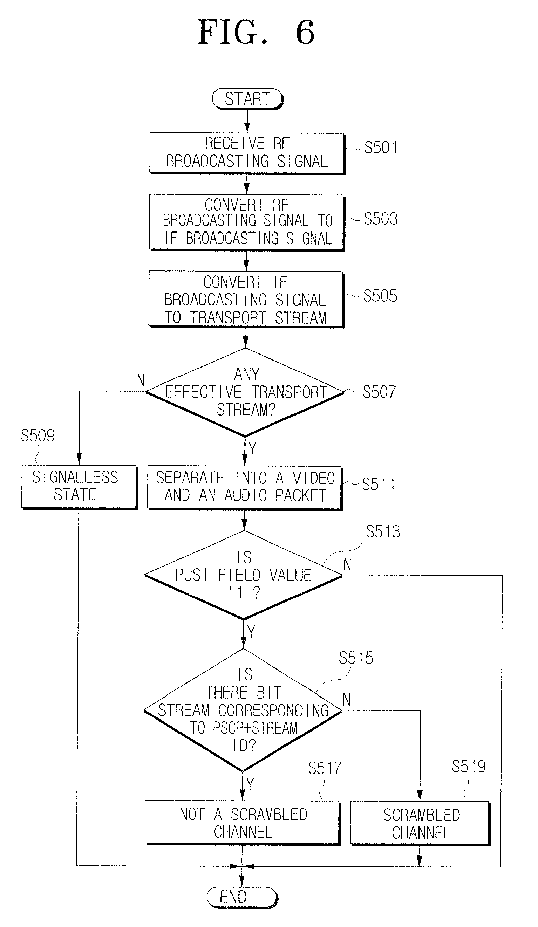

FIG. 6 is a flow chart illustrating a scrambled channel determination method according to an exemplary embodiment of the present invention.

To explain the scrambled channel determination method, FIGS. 2 to 4, and FIG. 6 will be referred to in relation to use of the digital broadcasting receiver 100 according to an exemplary embodiment of the present invention.

The tuner 110 receives an RF broadcasting signal via an antenna (S501), and converts the received RF broadcasting signal to an IF broadcasting signal as an output (S503).

The channel decoder 120 converts the IF broadcasting signal outputted from the tuner 110 to a transport stream (S505), and determines a lock state. Namely, the channel decoder 120 determines whether there is an effective transport stream (S507).

If it has been determined, by the channel decoder 120, that there is no effective transport stream (S507-N), there is no significant signal within a band of 6 MHz and thus, it is determined as a signalless state (S509).

On the other hand, if it has been determined, by the channel decoder 120, that there is an effective transport stream (S507-Y), the transport stream is provided to the demultiplexer 130. When the transport stream is transported from the channel decoder 120, the demultiplexing unit 131 in the demultiplexer 130 separates it into a video and an audio packet (S511).

The header analyzing unit 132 analyzes the header of the video and the audio packets being separated by the demultiplexer 130, to thereby determine if the PUSI field 313 has a value of '1'. Here, if the PUSI field 313 has the value '1', it implies that the transport stream of interest contains a start portion of the PES packet 200 data (S513).

If the analysis result on the header 310 by the header analyzing unit 132 determines that the PUSI field 313 has the value '1' (S513-Y), the scramble determination unit 133 determines whether the payload 320 of the video and the audio packets contain a bit stream corresponding to the PSCP + the Stream ID (S515).

If the scramble determination unit 133 has decided that the payload 320 of the current transport stream contains a bit stream corresponding to the PSCP + the Stream ID (S515-Y), it means that the current transport stream does not carry a scrambled channel (S517).

However, if the scramble determination unit 133 has decided that the payload 320 of the current transport stream does not contain a bit stream corresponding to the PSCP + the Stream ID (S515-N), it means that the current transport stream carries a scrambled channel (S519).

The above-described scramble channel determination method, specifically operations S501 to S505, can also be implemented on the digital broadcasting receiver 400 illustrated in FIG. 5. The difference is that operation S511 is carried out in the demultiplexer 430, and operations S513 to S519 are carried out, respectively, in the first header analyzing unit 442, the first scramble determination unit 443, the second header analyzing unit 452, and the second scramble determination unit 453 built in the video and audio decoders 440 and 450.

The example embodiments of the present invention provide a digital broadcasting receiver which can readily identify a scrambled channel prior to decoding a transport stream, and a scrambled channel determination method thereof.

As explained so far, the digital broadcasting receiver and its scrambled channel determination method identify a scrambled channel before a transport stream is decoded. As a result, response speed of the receiver during channel selection can be improved and the automatic channel setup can be done at an increased speed, thereby providing greater convenience and improved usage for users.
The foregoing exemplary embodiments are merely exemplary and are not to be construed as limiting the present invention. The present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital broadcasting receiver comprising:
a header analyzing unit (132, 442, 452) which analyzes headers of a video packet and an audio packet separated from a transport stream, to thereby determine existence of a start portion of a packetized elementary stream (PES) packet data; and
a scramble determination unit (133, 443, 453) which determines existence of a scrambled channel by analyzing payloads of the video packet and the audio packet, if the header analyzing unit determines that the video packet and the audio packets contain the start portion of the PES packet data.

2. The digital broadcasting receiver of claim 1, wherein the scramble determination unit (133, 443, 453) determines the existence of a scrambled channel by analyzing payloads of a pair of the video and audio packets.

3. The digital broadcasting receiver of claim 1 or 2, wherein the header analyzing unit (132, 442, 452) determines that the video and audio packets contain the start portion of the PES packet data, if a payload unit start indicator (PUSI) field in the header has a value of '1'.

4. The digital broadcasting receiver of claim 1, 2 or 3, wherein the scramble determination unit (133, 443, 453) determines whether the payload contains a bit stream corresponding to a packet start code prefix (PSCP) and a Stream Identifier (ID), and determines the scrambled channel if the bit stream is not contained in either of the video packet and the audio packet.

5. The digital broadcasting receiver of any preceding claim further comprising:
a tuner (110, 410) which converts a radio frequency (RF) broadcasting signal to an intermediate frequency (IF) broadcasting signal;
a channel decoder (120, 420) which converts the IF broadcasting signal to the transport stream;
a demultiplexer (130, 430) which separates the transport stream into the video packet and the audio packet;
a video decoder (140, 440) which decodes the video packet; and
an audio decoder (150, 450) which decodes the audio packet.

6. The digital broadcasting receiver of claim 5, wherein the header analyzing unit (132) and the scramble determination unit (133) are provided in the demultiplexer (130).

7. The digital broadcasting receiver of claim 5, wherein the header analyzing unit (442, 452) and the scramble determination unit (443, 453) are provided in the video decoder (440) and in the audio decoder (450), respectively.

8. A scrambled channel determination method comprising:
analyzing headers of a video packet and an audio packet separated from a transport stream, to thereby determine existence of a start portion of a packetized elementary stream (PES) packet data; and
determining, based on a determination result, existence of a scrambled channel by analyzing payloads of the video packet and the audio packet, if the video and the audio packets contain the start portion of the PES packet data.

9. The method of claim 8, wherein the existence of a scramble channel is determined by analyzing payloads of a pair of the video and audio packets.

10. The method of claim 8 or 9, wherein the PES packet data is determined to have the start portion if a payload unit start indicator (PUSI) field in the header has a value of '1'.

11. The method of claim 8, 9 or 10, wherein the determining the existence of the scrambled channel comprises:
determining whether the payloads contain a bit stream corresponding to a packet start code prefix (PSCP) and a Stream Identifier (ID); and
determining that the transport stream carries the scrambled channel if the bit stream is not contained in either of the video packet and the audio packet.
